# EUROPÄISCHE PATENTSCHRIFT

(11) **EP 1 426 211 B1**
(45) Veröffentlichungstag und Bekanntmachung des Hinweises auf die Patenterteilung: **23.12.2009**
(21) Anmeldenummer: 03023362.1
(22) Anmeldetag: 16.10.2003
(51) Int. Cl.: B60G 17/08

(54) **Aus Feder und Dämpfer bestehende Federungsanordnung**
Suspension unit with spring and damper
Unité de suspension avec ressort et amortisseur

(30) Priorität: 06.12.2002 DE 10257008
(43) Veröffentlichungstag der Anmeldung: 09.06.2004
(73) Patentinhaber: Continental Aktiengesellschaft, 30165 Hannover (DE)
(72) Erfinder: Rehra, Günter, 30900 Wedemark (DE); Schmitt, Wolfgang, 30823 Garbsen (DE)

(56) Entgegenhaltungen:
- EP-A- 0 539 063
- WO-A-99/04182
- US-A- 5 189 615
- US-A- 5 450 322
- US-A- 6 049 746

## Beschreibung

### Anwendungsgebiet

Die Erfindung betrifft eine in der Höhe verstellbare, aus Feder - insbesondere Luftfeder - und Dämpfer bestehende Federungsanordnung, ein sogenanntes Federbein, gemäß dem Oberbegriff des Patentanspruchs 1.

### Stand der Technik

Für extremste Federauslenkungen und für Notsituationen (z. B. defekte Feder) weisen derartige Federbeine üblicherweise Endlagenpuffer als Endanschlag bzw. als Auflager auf. In abgesenkter oder angehobener Position der Federbeine werden die Endlagenpuffer bereits bei geringen Federauslenkungen berührt. Das Anschlagen an die Endlagenpuffer bedeutet eine beträchtliche Einbuße an Fahrkomfort. Außerdem ist das wiederholte Anschlagen auf Dauer mit erhöhtem Verschleiß verbunden.

Die US 6 049 746 offenbart ein Verfahren, mit dem bei Dämpfersteuerungen das ggf. "harte" Anfahren der Endlagendämpfung verhindert werden soll. Für die Ermittlung des Ausgangssignals werden dabei immer zwei Eingangssignale verwendet werden, und zwar ein Abstandssignal und ein Geschwindigkeitssignal. Dies führt in nachteiliger Weise dazu dass bei gleichem Abstandssignal durch die Abhängigkeit von der Geschwindigkeit unterschiedliche Ausgangssignale erzeugt werden.

### Aufgabe der Erfindung

Die Aufgabe der Erfindung besteht in der Beschreibung eines höhenverstellbaren Federbeins, bei dem ein Anschlagen an den (oder die) Endlagenpuffer auch im abgesenkten oder angehobenen Zustand zuverlässig vermieden wird.

### Lösung und Vorteile

Wie aus Anspruch 1 ersichtlich, besteht die Lösung dieser Aufgabe erfindungsgemäß darin, dass die Dämpferkraft bzw, der Reibungskoeffizient ρₓ des Stoßdämpfers ausschließlich in Abhängigkeit von der Höhenlage hₓ der Feder steuerbar ist.
Dabei wird die Zunahme der Dämpfkraft bzw. des Reibungskoeffizienten ρₓ des Dämpfers in den Endlagen des Federbeins als Funktion der gemessenen Höhe hₓ des Luftfederbeins beschrieben.

Vorzugsweise werden die einzelnen Dämpfer in Abhängigkeit von der Lage der jeweiligen Luftfeder so gesteuert, dass die Dämpfkraft in mindestens einer der Endlagen erhöht wird. Und zwar wird die Dämpfkraft des Dämpfers im Nahbereich der mindestens einen Endlage (zunehmend) verhärtet.
Dabei kann die nichtlineare Kennlinie der Funktion durch eine Stützstellen-Tabelle beschrieben werden, die getrennt nach Zug- und Druckstufen fahrzeugspezifisch parametriert werden kann.

Durch eine derartige Endlagenverhärtung werden die Zug- und Druckanschläge des Federbeins vor einer Beschädigung bei zu großen Kräften geschützt. Auf Endlagenpuffer kann deshalb weitgehend verzichtet werden.

Die erfindungsgemäße Endlagen-Regeleinrichtung kann eine Ergänzung des Bausteins einer Federbein-Regelung sein und zu diesem überlagernd wirken.

Da insbesondere bei Luftfedern eine Höhenverstellung einfach zu realisieren ist, kommt eine erfindungsgemäße Beeinflussung der Dämpfkraft vorzugsweise bei Luftfederbeinen in Betracht.

Wenn der Dämpfer ein Druckdämpfer ist, kann die Dämpferverhärtung in den Endbereichen mittels Druckerhöhung im Dämpfer realisiert werden.

Dabei wird die Druckanpassung vorzugsweise mit Hilfe eines Druckwandlers erzeugt.

### Zeichnungen

Ein Ausführungsbeispiel und weitere Vorteile der Erfindung werden im Zusammenhang mit den nachstehenden Figuren erläutert, darin zeigt:
Fig. 1 eine Kraftfahrzeug-Luftfederanlage in schematischer Darstellung;
Fig. 2 den Längsschnitt durch ein Luftfederbein;
Fig. 3 ein Diagramm, welches die erfindungsgemäße Dämpferkraft gegenüber dem Federweg darstellt;
Fig. 4a und 4b jeweils ein vereinfachtes elektrisches Blockschaltbild für die Regelung/Steuerung der Luftfederanlage, und zwar:

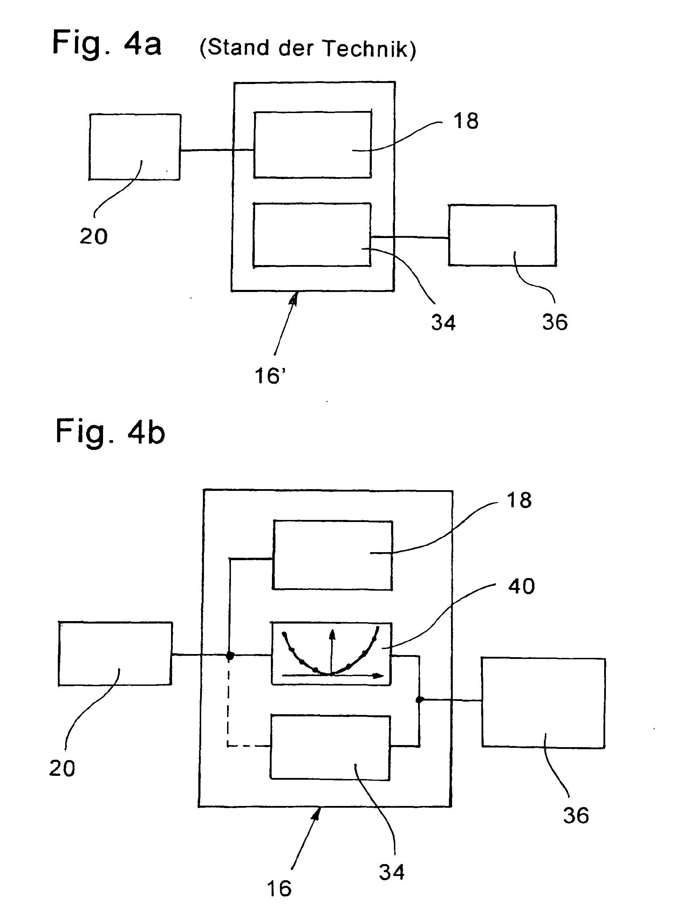

Fig. 4a ein Blockschaltbild gemäß dem Stand der Technik;
Fig. 4b ein Blockschaltbild mit erfindungsgemäßer Dämpferregelung.

### Beschreibung

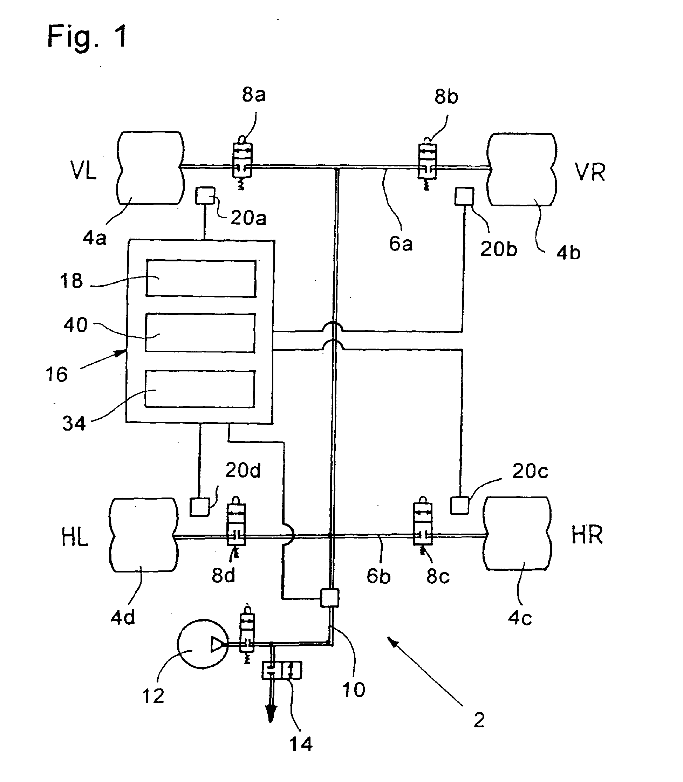

Die in Fig. 1 dargestellte Kraftfahrzeug-Luftfederanlage 2 verfügt über Luftfedern 4a, 4b, 4c, 4d, die den Achsen bzw. den Rädern des Kraftfahrzeugs zugeordnet sind.
Zwei der Luftfedern 4a, 4b stehen über eine erste Querleitung 6a und die beiden anderen Luftfedern 4c 4d über eine weitere Querleitung 6b miteinander in Verbindung. Die beiden Querleitungen 6a, 6b enthalten jeweils zwei Quersperrventile 8a, 8b und 8c, 8d. Jedes Quersperrventil 8a - 8d ist jeweils einer Luftfeder 4a, 4b, 4c bzw. 4d zugeordnet. Darüber hinaus stehen die Querleitungen 6a, 6b mit einer weiteren Leitung 10 in Verbindung, über die die Luftfedern 4a bis 4d mit Hilfe eines Kompressors 12 mit Druckluft befüllt werden können bzw. über die Druckluft aus den Luftfedern 4a bis 4d über ein weiteres Ventil 14 in die Atmosphäre abgelassen werden kann. Dazu können die Steuereingänge der entsprechenden Ventile 8a bis 8d, 14 und der Kompressor 12 von einer mit Niveauregeleinrichtung 18 ausgestatteten Zentraleinheit 16 angesteuert werden.
Mit Hilfe der sensierten Höhensignale kann die Niveauregeleinrichtung 18 die Höhe des Fahrzeugaufbaus - unabhängig vom Beladungszustand - auf Sollniveau regeln.

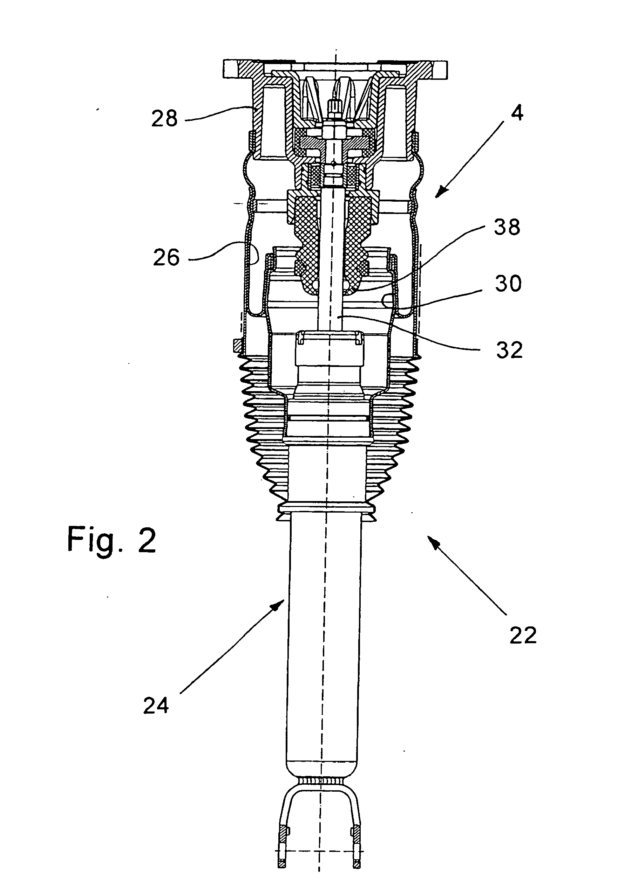

Die in Fig. 2 im Längsschnitt dargestellte Federungsanordnung 22 ist ein sogenanntes Federbein, das aus einer Luftfeder 4 mit integriertem Stoßdämpfer 24 besteht.

Die Luftfeder 4 weist einen zylindrischen Schlauchrollbalg 26 aus elastomerem Werkstoff auf. Das obere Ende des Schlauchrollbalgs 26 ist mit einem Deckel 28 druckdicht abgeschlossen und am (nicht dargestellten) Chassis befestigt.
Das untere Ende des Schlauchrollbalgs 26 ist an einem Abrollkolben 30 befestigt, der über das Gehäuse eines Stoßdämpfers 24 radseitig montiert ist.
Der Kolben 32 des Stoßdämpfers 24 ist am Chassis angebracht.
Der Stoßdämpfer 24 weist eine Dämpferregelung 34 (Fig. 1, Fig. 4) mit einem Dämpferstellglied 36 (Fig. 4) auf.
Für extremste Federauslenkungen ist das Federbein 22 mit einem Endlagenpuffer 38 ausgestattet.

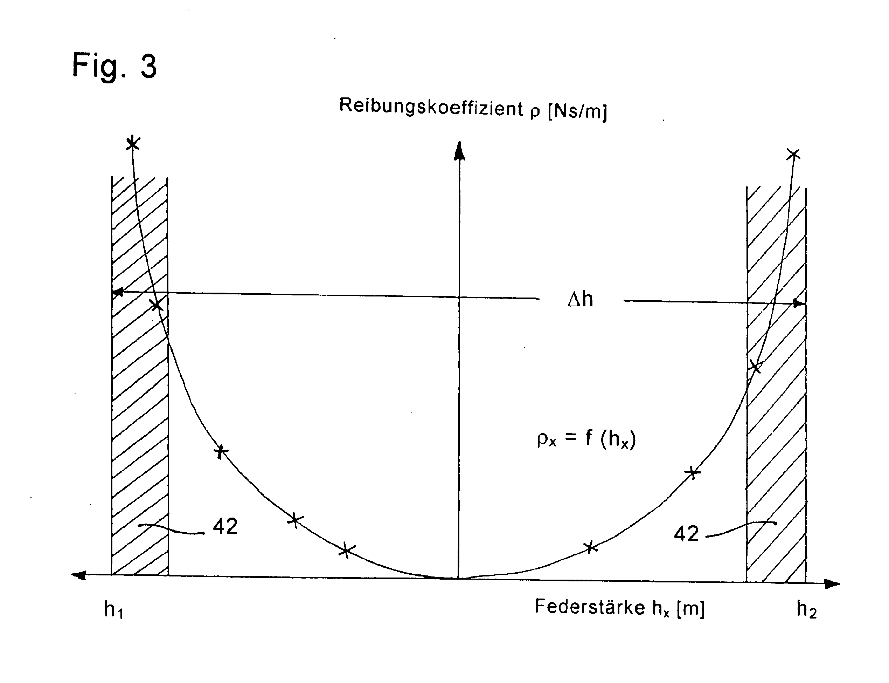

Das in Fig. 3 dargestellte Diagramm stellt die Dämpfkraft (genauer gesagt: den Reibungskoeffizienten ρₓ) gegenüber dem Federweg (der Federhöhe hₓ) dar: ρₓ = f (hₓ). Wie aus dem Diagramm ersichtlich, nimmt der Reibungskoeffizient ρₓ in Richtung auf die Endlagen h₁, h₂ (maximaler Federhub Δh = h₂ - h₁) der Luftfeder 4 erfindungsgemäß progressiv zu und steigt im Nahbereich 42 der Enlagen h₁, h₂ stark an.

Das Blockschaltbild (Fig. 4a) einer herkömmlichen Dämpferregelung zeigt einen Baustein "Dämpferregelung" 34, der mit einem Dämpferstellglied 36 in Wirkverbindung steht. Dieses Dämpferstellglied 36 ist das "ausführende Organ" zur Veränderung der Dämpfkraft, genauer gesagt: zur Veränderung des Reibungskoeffizienten ρₓ des betreffenden Dämpfers 24. Außer einer Dämpferregeleinrichtung 34 und einem Dämpferstellglied 36 weist die hier dargestellte Zentraleinheit 16' die Elektronik der Niveauregeleinrichtung 18 auf, die die von den Höhensensoren 20 (20a, 20b, 20c, 20d) empfangenen Signale zwecks Einstellung des Sollniveaus verarbeiten kann.

Gegenüber der in Fig. 4a dargestellten herkömmlichen Schaltungsanordnung weist die in Fig. 4b schematisch dargestellte erfindungsgemäße Schaltung wesentliche Besonderheiten auf: Der Baustein "Dämpferregelung" 34 ist um einen Baustein "Endlagenregelung" 40 ergänzt. Dieser Baustein "Endlagenregelung" 40 weist die in der Fig. 3 dargestellte Dämpferkraftkennlinie ρₓ = f (hₓ) auf. Diese Kennlinie ist durch eine progressive Zunahme der Dämpfkraft (des Reibungskoeffizienten ρₓ) in Richtung auf die Endlagen h₁, h₂ der Luftfeder 4 charakterisiert.

Um ein der Federhöhe hₓ entsprechendes Steuersignal ρₓ an das Dämpferstellglied 36 ausgeben zu können, steht der Baustein "Endlagenregelung" 40 mit dem Höhensensor 20 in Verbindung.

Für den Fall einer "aktiven" Dämpferregelung steht zudem der Baustein "Dämpferregelung" 34 ebenfalls mit dem Höhensensor 20 in Verbindung (gestrichelte Linie).
Zur Steuerung der Dämpfkraft werden die von den Bausteinen "Dämpferregelung" 34 und "Endlagenregelung" 40 ausgegebenen Signale an das Dämpferstellglied 36 ausgegeben. Mit Hilfe der erfindungsgemäßen Endlagenregelung 38 kann auf den Einsatz von Endlagenpuffer 40 (Fig. 2) verzichtet werden.

### Bezugszeichenliste

- 2: Kraftfahrzeug-Luftfederanlage
- 4; 4a, 4b, 4c, 4d: Luftfeder(n)
- 6a, 6b: Querleitung(en)
- 8a, 8b, 8c, 8d: Quersperrventil(e)
- 10: Leitung
- 12: Kompressor
- 14: Ventil
- 16, 16': Zentraleinheit
- 18: Niveauregeleinrichtung
- 20; 20a, 20b, 20c, 20d: Höhensensor(en)
- 22: Federungsanordnung
- 24: (Stoß-)Dämpfer
- 26: Schlauchrollbalg
- 28: (Luftfeder-)Deckel
- 30: Abrollkolben
- 32: (Stoßdämpfer-)Kolben
- 34: Dämpferregeleinrichtung, Baustein ""Dämpferregelung"
- 36: Dämpferstellglied
- 38: Endlagenpuffer
- 40: Endlagen-Regeleinrichtung, Baustein "Endlagenregelung"
- 42: Nahbereich der Endlagen
- px: Reibungskoeffizient
- hₓ: Federhöhe, Höhenlage, Höhe des Federbeins
- h₁, h₂: Endlagen der Feder 4
- Δh: maximaler Federhub

## Patentansprüche

1. Aus Feder (4) und Dämpfer (24) bestehende Federungsanordnung (22), ein sogenanntes Federbein,
- wobei die durch den maximalen Federhub (Δh = h₂ - h₁) charakterisierte Feder (4; 4a, 4b, 4c oder 4d) eine Niveauregeleinrichtung (18) nebst Höhensensor (20; 20a, 20b, 20c oder 20d) zur Bestimmung und Einstellung der Federhöhe (hₓ) zwischen den beiden Endlagen (h₁ und h₂) aufweist, und
- wobei der Dämpfer (24) mit einer Regelungseinrichtung (34) zur Einstellung der Dämpfkraft (ρₓ)_versehen ist,
**dadurch gekennzeichnet,**
**dass** die Dämpfkraft (ρₓ) des Dämpfers (24) eine nichtlineare Funktion der jeweils gemessenen Federhöhe (hₓ) ist, wobei die Dämpfkraft (ρₓ) des Dämpfers (24) **ausschließlich** in Abhängigkeit der Federhöhe (hₓ) der Feder (4) steuerbar ist.

2. Federungsanordnung nach Anspruch 1, **dadurch gekennzeichnet,**
**dass** die Dämpfkraft (ρₓ) des Dämpfers (24) in Richtung auf mindestens eine der Endlagen (h₁, h₂) der Feder (4) zunimmt.

3. Federungsanordnung nach Anspruch 1 oder 2,
**gekennzeichnet durch**
eine progressive Zunahme der Dämpfkraft (ρₓ)_im Nahbereich (42) mindestens einer der Endlagen (h₁ und/oder h₂).

4. Federungsanordnung nach einem der Ansprüche 1 bis 3,
**dadurch gekennzeichnet,**
**dass** der Ausgang der Endlagen-Regeleinrichtung (40) mit dem Ausgang der Dämpferregeleinrichtung (34) verknüpft ist.

5. Federungsanordnung nach einem der Ansprüche 1 bis 4,
**dadurch gekennzeichnet,**
**dass** die nichtlineare Kennlinie der Dämpfkraft (ρₓ)_durch eine Stützstellen-Tabelle gegeben ist, die getrennt nach Zug- und Druckstufe fahrzeugspezifisch parametriert ist.

6. Federungsanordnung nach einem der Ansprüche 1 bis 5,
**dadurch gekennzeichnet,**
**dass** die Feder (4) eine Luftfeder ist.

7. Federungsanordnung nach einem der Ansprüche 1 bis 6,
**dadurch gekennzeichnet,**
**dass** der Stoßdämpfer (24) ein Luftdämpfer ist.

8. Federungsanordnung nach Anspruch 7,
**dadurch gekennzeichnet,**
**dass** im Fall eines Luftdämpfers die Dämpferverhärtung mittels Druckerhöhung im Dämpfer (24) realisiert ist.

9. Federungsanordnung nach Anspruch 8,
**dadurch gekennzeichnet,**
**dass** die Druckanpassung im Dämpfer (24) mit Hilfe eines Druckwandlers realisiert ist.

## Claims

1. Suspension unit (22) comprising a spring (4) and damper (24), a "suspension strut",
- wherein the spring (4; 4a, 4b, 4c or 4d) which is **characterized by** the maximum spring stroke (Δh = h₂ - h₁) has a level control device (18) in addition to a height sensor (20; 20a, 20b, 20c or 20d) for determining and setting the spring height (hₓ) between the two end positions (h₁ and h₂), and
- wherein the damper (24) is provided with a control device (34) for setting the damping force (ρₓ),
**characterized in that** the damping force (ρₓ) of the damper (24) is a non-linear function of the respectively measured spring height (hₓ), the damping force (ρₓ) of the damper (24) being controllable **exclusively** as a function of the spring height (hₓ) of the spring (4).

2. Suspension unit according to Claim 1, **characterized in that** the damping force (ρₓ) of the damper (24) increases in the direction of at least one of the end positions (h₁, h₂) of the spring (4).

3. Suspension unit according to Claim 1 or 2, **characterized by** a progressive increase in the damping force (ρₓ) in the vicinity (42) of at least one of the end positions (h₁ and/or h₂).

4. Suspension unit according to one of Claims 1 to 3, **characterized in that** the output of the end position control device (40) is linked to the output of the damper control device (34).

5. Suspension unit according to one of Claims 1 to 4, **characterized in that** the non-linear characteristic of the damping force (ρₓ) is provided by a supporting-point table which is parameterized separately in a manner specific to a vehicle in accordance with a tension and compression stage.

6. Suspension unit according to one of Claims 1 to 5, **characterized in that** the spring (4) is an air spring.

7. Suspension unit according to one of Claims 1 to 6, **characterized in that** the shock absorber (24) is an air damper.

8. Suspension unit according to Claim 7, **characterized in that**, in the case of an air damper, the hardening of the damper is realized by means of an increase in pressure in the damper (24).

9. Suspension unit according to Claim 8, **characterized in that** the adaptation of pressure in the damper (24) is realized with the aid of a pressure transducer.

## Revendications

1. Système de suspension (22) constitué d'un ressort (4) et d'un amortisseur (24) et appelé jambe de force, dans lequel
le ressort (4; 4a, 4b, 4c ou 4d) **caractérisé par** la course maximale de ressort (Δh = h₂ - h₁) présente un dispositif (18) de régulation de niveau en plus d'un détecteur de hauteur (20 ; 20a ; 20b ; 20c et 20d) qui détermine et règle la hauteur (hₓ) du ressort entre les deux positions d'extrémité (h₁ et h₂),
l'amortisseur (24) étant doté d'un dispositif de régulation (34) qui règle la force d'amortissement (ρₓ), **caractérisé en ce que**
la force d'amortissement (ρₓ) de l'amortisseur (24) est une fonction non linéaire de la hauteur (hₓ) du ressort mesurée à chaque instant, la force d'amortissement (ρₓ) de l'amortisseur (24) pouvant être commandée **exclusivement** en fonction de la hauteur (hₓ) du ressort (4).

2. Système de suspension selon la revendication 1, **caractérisé en ce que** la force d'amortissement (ρₓ) de l'amortisseur (24) augmente en direction d'au moins une des positions d'extrémité (h₁, h₂) du ressort (4).

3. Système de suspension selon les revendications 1 ou 2, **caractérisé en ce que** la force d'amortissement (ρₓ) augmente progressivement à proximité (42) d'au moins l'une des positions d'extrémité (h₁ et/ou h₂).

4. Système de suspension selon l'une des revendications 1 à 3, **caractérisé en ce que** la sortie du dispositif (40) de régulation des positions d'extrémité est reliée à la sortie du dispositif (34) de régulation de l'amortissement.

5. Système de suspension selon l'une des revendications 1 à 4, **caractérisé en ce que** la ligne caractéristique non linéaire de la force d'amortissement (ρₓ) est donnée dans un tableau de points d'appui qui sont paramétrés séparément pour chaque véhicule en fonction de la traction et de la compression.

6. Système de suspension selon l'une des revendications 1 à 5, **caractérisé en ce que** le ressort (4) est un ressort pneumatique.

7. Système de suspension selon l'une des revendications 1 à 6, **caractérisé en ce que** l'amortisseur (24) est un amortisseur pneumatique.

8. Système de suspension selon la revendication 7, **caractérisé en ce qu'**au cas où l'amortisseur est un amortisseur pneumatique, le durcissement de l'amortisseur est obtenu par augmentation de la pression de l'amortisseur (24).

9. Système de suspension selon la revendication 8, **caractérisé en ce que** la pression qui règne dans l'amortisseur (24) est adaptée à l'aide d'un convertisseur de pression.
